# EUROPEAN PATENT APPLICATION

(11) **EP 1 394 407 A1**
(43) Date of publication of application: **03.03.2004**
(21) Application number: 02720568.1
(22) Date of filing: 22.04.2002
(51) Int. Cl.: F03G 3/06, H02K 53/00

(54) **PENDULUM TYPE POWER GENERATOR**

(30) Priority: 16.05.2001 JP 2001145936
(71) Applicant: Miyake, Masaharu, Kawanishi-shi, Hyogo 666-0151 (JP)
(72) Inventor: Miyake, Masaharu, Kawanishi-shi, Hyogo 666-0151 (JP)
(74) Representative: Hoffmann, Jörg Peter, Dr. Ing.
(86) International application number: PCT/JP2002/004020
(87) International publication number: WO 2002/093008

(57) **Abstract**

A pendulum member swings right and left relative to an air compressor remaining still in a fixed position. As a result, the air compressor slides relative to and from end to end of a piston chamber of the pendulum member. The air compressor compresses air in a portion of the piston chamber forward with respect to a sliding direction of the air compressor, and decompresses air in a portion of the piston chamber rearward with respect to the sliding direction. This action is repeated continuously whereby compressed air in the forward portion of the piston chamber flows through a wind turbine chamber to the rearward portion of the piston chamber. The series of air flows forcibly and continuously rotates a wind turbine, which in turn rotates a generator to obtain electricity.

## Description

### BACKGROUND OF THE INVENTION

### (1) Field of the Invention

This invention relates to a pendulum type power generating apparatus for converting swings of a pendulum into electric energy.

### (2) Description of the Related Art

Conventionally, electricity is obtained from varied sources such as nuclear power, thermal power, water power, wind power, solar radiation, fuel cells and so on.

However, these devices have advantages and disadvantages.

As for nuclear power generation, great misgivings have been expressed particularly in recent years, along with the question of waste disposal. Nuclear power generation requires large-scale facilities, which also is a limiting factor as regards location. As a result, it is difficult to obtain an agreement of the residents around a new construction site. Thus, the prospect of nuclear power generation for the future is not without problems.

Thermal power generation consumes large amounts of resources. To run a power plant that generates 1,000,000 KW for one year, for example, it consumes 2,200,000 tons of coal, 1,400,000 tons of petroleum, or 1,100,000 tons of natural gas. This is far from low cost. It has already been a long time since the depletion of natural resources was pointed out. Thermal power generation has a prospect with problems relating to stability of price and supply, and global warming due to CO₂ emissions.

Solar power generation is costly with a low operating rate of 10%, vast installation space, and so on. Steady supply is difficult since the energy that can be taken out is dependent on the weather and season.

Wind power generation requires a wind velocity of at least 5m throughout the year, which imposes a limitation in location. A large amount of energy supply cannot be expected because of a low power generating efficiency at 25 to 30% and operating rate at 15 to 20%. Wind power generating equipment requires a vast installation area 7 to 10 times that of a solar power generating installation. Besides, since the operating rate is dependent on the weather and season, natural conditions could result in high cost and a short supply of energy.

Water power generation and geothermal power generation have stability in supply and involve no CO₂ emission. These are therefore advantageous from the point of view of environmental pollution and destruction. However, limitations exist in availability of resources, environment and geographical conditions, and cost may be high.

Technological development has been made in power generation from fuel cells, to promote power generating efficiency to 40 to 60%. However, many problems remain to be solved, such as achieving low cost, securing of raw material (hydrogen), improving the manufacturing method and reliability, and an adjustment of infrastructure. Thus, it will take time to put his type of power generation to practical use in the true sense.

In view of the state of the art noted above, Inventor has attempted to develop a power generating apparatus, by using parts and materials used commonly at least at present, to minimize the consumption of natural resources such as fossil fuels, achieve low cost, and to be totally free from limitations imposed by weather and geographic conditions. As a result of trial and error, a power generating apparatus has been developed, as proposed herein, which may be small for household use, medium-size for industrial use, or very large-scale for use in a power plant or the like. A large quantity of electricity may be generated with such apparatus arranged side by side. The apparatus minimizes the consumption of varied types of available energy, and hence a minimal fuel cost.

### SUMMARY OF THE INVENTION

Thus, the object of this invention is to provide a power generating apparatus simple in construction, easy and inexpensive to manufacture, installable anywhere, and environment-friendly.

The above object is fulfilled, according to this invention, by a pendulum type power generating apparatus comprising a pendulum member defining a substantially sealed space therein, and parallel swing links for suspending the pendulum member to be reciprocally swingable right and left, the substantially sealed space including a wind turbine chamber having a wind turbine mounted therein, and a piston chamber for transmitting compressed air into the wind turbine chamber, the piston chamber having an air compressor slidably mounted in gastight condition for sliding relative to the pendulum member to compress air in the piston chamber, the pendulum member and the air compressor being swingable right and left relative to each other to compress and decompress air in the piston chamber, compressed air flowing from an air-compressing portion of the piston chamber to an air-decompressing portion of the piston chamber for continuously rotating the wind turbine, rotation of the wind turbine being transmitted to a generator, the apparatus further comprising a field magnet disposed in one of a lower position of the pendulum member and a ground position, and an electromagnet disposed in the other, the electromagnet having switchable polarity to attract and repel the field magnet, thereby to promote right and left reciprocating swings of the pendulum member.

In the above pendulum type power generating apparatus, with the pendulum member swinging right and left, the air compressor mounted in the piston chamber slides right and left relative to the pendulum member. That is, the pendulum member swings right and left relative to the air compressor remaining in a fixed position. As a result, the air compressor slides from the right end to the left end, and then from the left end back to the right end, of the piston chamber. Air in the piston chamber present forward of the moving air compressor is compressed. Conversely, air in the piston chamber present rearward of the moving air compressor is decompressed. Since the pendulum member swings right and left, the right and left sliding of the air compressor relative to the piston chamber is repeated continuously. As a result, the compressed air flows from the piston chamber through the wind turbine chamber to the decompressed portion of the piston chamber. Such air flows are reversed repeatedly and continuously. The series of air flows forcibly and continuously rotates the wind turbine. The continuous rotation of the wind turbine rotates the generator to obtain electricity.

Moreover, this pendulum member power generating apparatus includes a field magnet disposed in one of a lower position of the pendulum member and a ground position, and an electromagnet disposed in the other. By switching the polarity of the electromagnet, attractive and repulsive forces are applied to the field magnet, to promote the right and left reciprocating swings of the pendulum member.

In the pendulum type power generating apparatus according to the invention, as noted above, the pendulum member swings right and left relative to the air compressor remaining in a fixed position. The air in the piston chamber forward of the air compressor in the relative movement is compressed, while the air in the piston chamber rearward of the air compressor is decompressed. This action is repeated continuously. Consequently, the air flows are reversed continuously between the compressed portion and decompressed portion of the piston chamber. The series of air flows forcibly and continuously rotates the wind turbine. The continuous rotation of the wind turbine operates the generator to obtain electricity with greatly increased efficiency.

Moreover, by switching the polarity of the electromagnet, attractive and repulsive forces are applied to the field magnet, to promote the right and left reciprocating swings of the pendulum member. This effectively produces inertial forces for the right and left reciprocating swings. The right and left reciprocating swings are thereby made light and smooth to realize an improved power generating efficiency.

Thus, this invention provides a pendulum type power generating apparatus that uses parts and materials used commonly at least at present, to minimize the consumption of natural resources such as fossil fuels, achieve low cost, safety and reliability, and to be totally free from limitations imposed by weather and geographic conditions.

The power generating apparatus may be made small for household use, medium-size for industrial use, or very large-scale for use in a power plant or the like. A large quantity of electricity may be generated with such apparatus arranged side by side.

As one example of future applications, with a diffusion of electric cars, the apparatus may be installed at a gasoline station or the like to supply electricity to electric cars in the same way as gasoline is supplied. Further, the apparatus, which does not need natural resources, of course is desirable from the viewpoint of global environment. In addition, the apparatus, as distinct from wind power generators and solar power generators, may be installed in any region on the earth.

In particular, the electric power generated may be used to electrolyze sea water or fresh water to produce hydrogen and oxygen. The hydrogen obtained may be used as a next generation fuel (e.g. for fuel cells). Thus, the apparatus according to this invention may be used effectively in varied fields such as automobiles, households and industries, and hence a great industrial utility.

In the above construction, the parallel swing links for suspending the pendulum member may be pivotally supported in intermediate positions thereof by a machine casing, each of the parallel swing links having a balance weight attached to an upper end thereof.

The balance weights disposed at the upper ends of the parallel swing links pivotally supported in intermediate positions thereof by the machine casing are effective to produce inertial forces for the right and left reciprocating swings of the pendulum member. The right and left reciprocating swings of the pendulum member are thereby made lighter and smoother, and continued over an extended time.

This pendulum type power generating apparatus effectively produces inertial forces for the right and left reciprocating swings of the pendulum member. The right and left reciprocating swings of the pendulum member are thereby made smoother, and continued over an extended time with little energy. This contributes to a great improvement in the power generating efficiency of the generator.

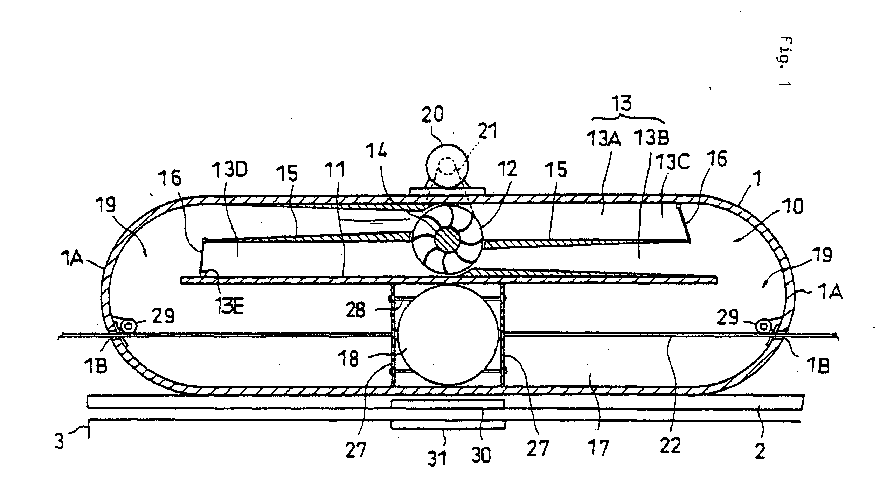

In the above apparatus according to this invention, the wind turbine chamber may define upper and lower compressed air passages each having a switch valve (see Fig. 1).

With this construction, compressed air is effectively guided into each compressed air passage for rotating the wind turbine only in one direction. Thus, a rotating efficiency of the wind turbine may be secured to generate electricity efficiently.

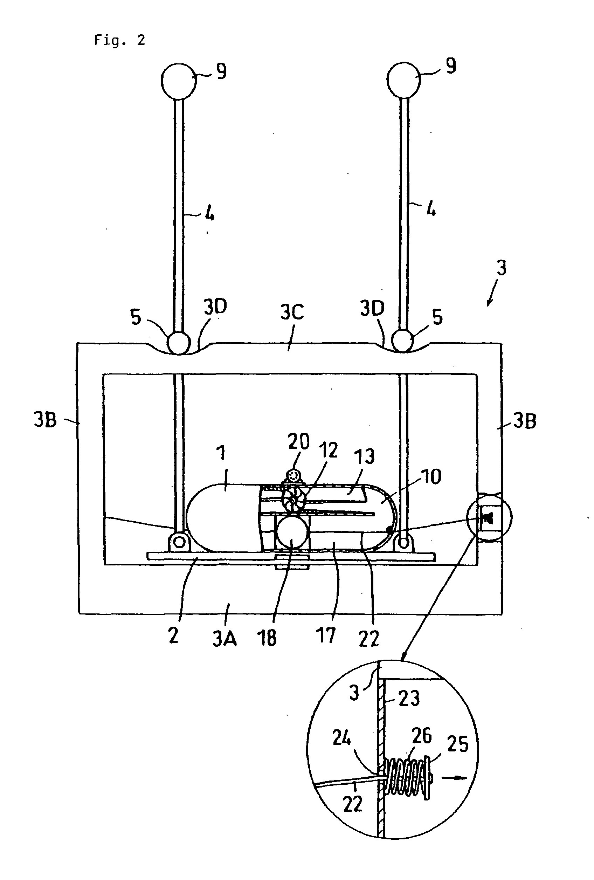

The above apparatus according to this invention may employ a support cord in the form of a string to allow the right and left sliding of the air compressor relative to the pendulum member. The air compressor is secured to the support cord extending through the piston chamber along the right and left sliding direction of the air compressor. The support cord has opposite ends thereof fixed to the machine casing outside the pendulum member. The air compressor is maintained in a fixed position in the right and left sliding direction (see Figs. 1 and 2).

This construction is simple and inexpensive.

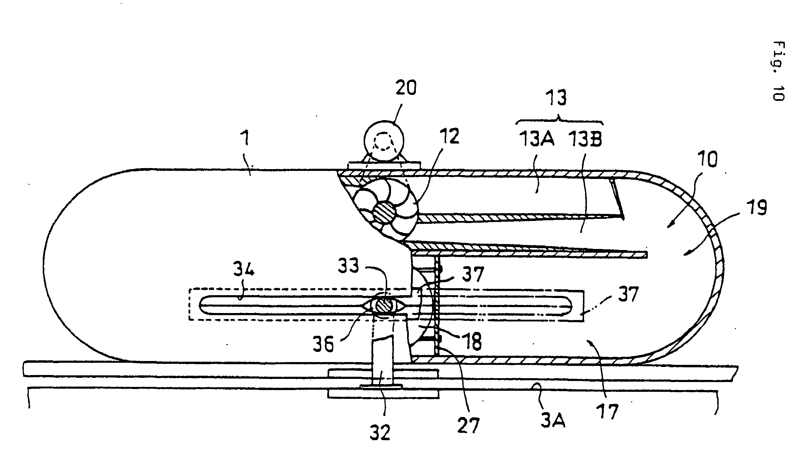

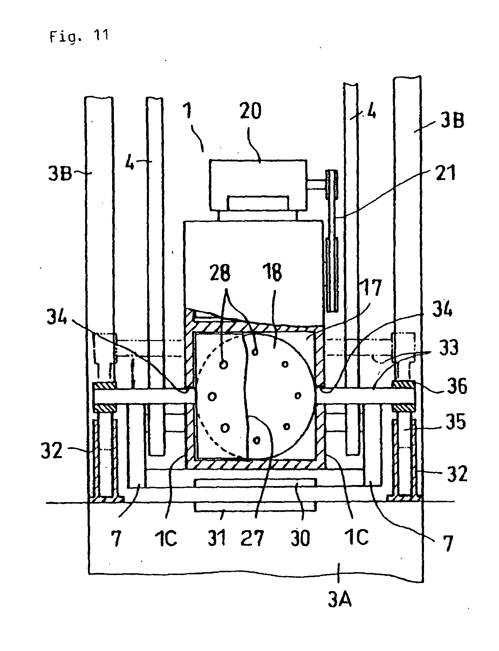

Further, the apparatus according to this invention may employ support rods to allow the right and left sliding of the air compressor relative to the pendulum member. The air compressor is secured to the support rods extending through the piston chamber along the fore and aft direction perpendicular to the right and left sliding direction of the air compressor. The support rods have opposite ends thereof vertically movably mounted on the machine casing outside the pendulum member. Front and rear walls of the pendulum member define slits extending in the right and left direction, through which the support rods project outward, to allow the right and left sliding of the air compressor relative to the pendulum member. Flexible sealing elements are arranged inwardly of the slits (see Figs. 10 and 11).

This construction can maintain the air compressor in the fixed relative position while applying no load to the right and left reciprocating swings of the pendulum member. This effectively produces inertial forces for the right and left reciprocating swings of the pendulum member. The right and left reciprocating swings are thereby made light and smooth, and continued over an extended time.

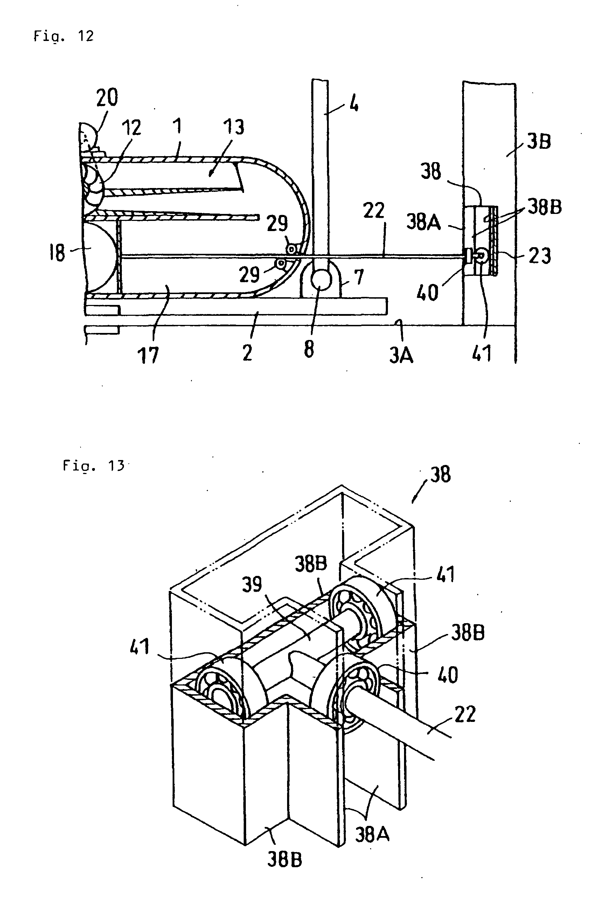

Further, a support element in the form of a metal rod may be employed to allow the right and left sliding of the air compressor relative to the pendulum member. The air compressor is secured to the support element extending through the piston chamber along the right and left sliding direction of the air compressor. The support element has opposite ends thereof vertically movably supported by the machine casing outside the pendulum member. The air compressor is maintained in a fixed position in the right and left sliding direction (see Figs. 12 and 13).

This construction can maintain the air compressor in the fixed relative position while applying no load to the right and left reciprocating swings of the pendulum member. This effectively produces inertial forces for the right and left reciprocating swings of the pendulum member. The right and left reciprocating swings are thereby made lighter and smoother, and continued over an extended time.

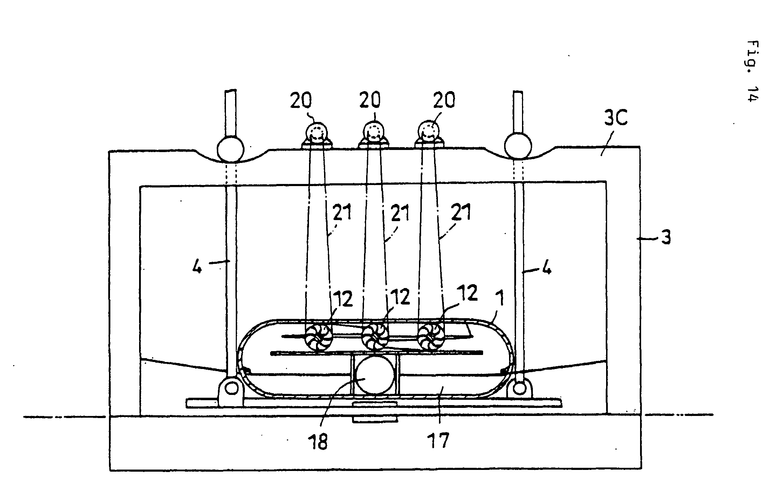

According to this invention, the generator may be disposed on the machine casing, and not on the pendulum member, to be operatively connected to the wind turbine in the pendulum member. In this case, a plurality of generators may be arranged on the machine casing, with wind turbines corresponding in number to the generators arranged in the pendulum member. The generators are operatively connected to the wind turbines through transmission elements, respectively (see Fig. 14).

The pendulum member is thereby made far lighter in weight, to be capable of lighter right and left reciprocating swings. This realizes a desirable power generation, or enables a large quantity of power generation.

Other features and advantages of this invention will be apparent from the following description of the preferred embodiments to be taken with the accompanying drawings.

### BRIEF DESCRIPTION OF THE DRAWINGS

Fig. 1 is an enlarged sectional view of a principal portion of a pendulum type power generating apparatus in a first embodiment of this invention;
Fig. 2 is a front view, partly in section, of the power generating apparatus in the first embodiment, with a portion shown in enlargement;
Fig. 3 is a side view, partly in section, of the power generating apparatus in the first embodiment;
Fig. 4 shows explanatory views illustrating operation of the first embodiment shown in Fig. 1, in which Fig. 4A shows a pendulum member in an upper right limit position, and Fig. 4B shows the pendulum member in an upper left limit position;
Fig. 5 is an explanatory view illustrating operation of the first embodiment shown in Fig. 1, which is an enlarged fragmentary sectional view illustrating action of a permanent magnet disposed on the pendulum member and an electromagnet disposed on a machine casing;
Fig. 6 is an enlarged fragmentary sectional view similar to Fig. 5 and illustrating action of the two magnets;
Fig. 7 is an enlarged fragmentary sectional view similar to Fig. 5 and illustrating action of the two magnets;
Fig. 8 is an enlarged fragmentary sectional view similar to Fig. 5 and illustrating action of the two magnets;
Fig. 9 is an enlarged fragmentary sectional view similar to Fig. 5 and illustrating action of the two magnets;
Fig. 10 is an enlarged front view, partly in section, of a principal portion of a pendulum type power generating apparatus in a second embodiment of this invention;
Fig. 11 is an enlarged side view, partly in section, of the principal portion of the second embodiment shown in Fig. 10;
Fig. 12 is an enlarged front view, partly in section, of a principal portion of a pendulum type power generating apparatus in a third embodiment of this invention;
Fig. 13 is an enlarged perspective view, partly in section, of a principal portion of the third embodiment shown in Fig. 12; and
Fig. 14 is a front view, partly in section, of a pendulum type power generating apparatus in a fourth embodiment of this invention.

### DESCRIPTION OF THE PREFERRED EMBODIMENTS

### <First Embodiment>

A first embodiment of this invention will be described in detail hereinafter.

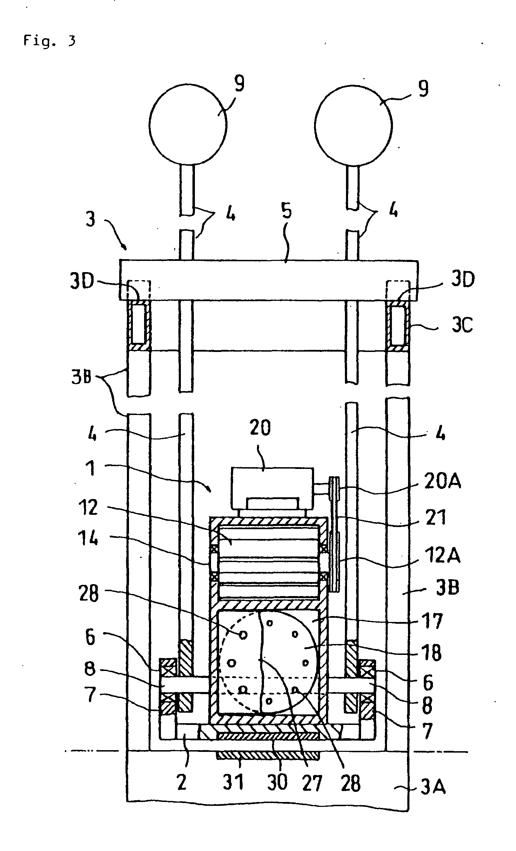

Fig. 1 is an enlarged sectional view of a principal portion of a pendulum type power generating apparatus according to this invention. Fig. 2 is a front view, partly in section, showing an overall construction of the power generating apparatus. Fig. 3 is a side view, partly in section, of the power generating apparatus shown in Fig. 2.

In these drawings, numeral 1 denotes a pendulum member having a rectangular cross section and an elliptical shape in front view as shown. The pendulum member 1 is placed on and fixed to a support frame 2 of larger fore and aft and right and left dimensions than the pendulum member 1. The pendulum member 1 is supported through the support frame 2 by four parallel swing links 4 suspended from a machine casing 3 as spaced from one another in fore and aft and right and left directions. The machine casing 3 includes a base 3A, pairs of front and rear props 3B arranged at opposite, right and left ends of the base 3A, and top frames 3C connecting upper ends of these four props 3B.

The four parallel swing links 4 are connected in longitudinally intermediate positions thereof to fulcrum shafts 5 having sufficient dimensions to bridge the pairs of front and rear top frames 3C. The support frame 2 includes a pair of front and rear support shaft support frames 7 with bearings 6 arranged at each of the right and left ends thereof. A support shaft 8 is rotatably supported between each pair of front and rear bearings 6. Lower ends of the four parallel swing links 4 are fixed connected to these support shafts 8. Thus, the pendulum member 1 is supported to be swingable right and left about fulcrums provided by points of contact between the fulcrum shafts 5 of these four parallel swing links 4 and the top frames 3C of the machine casing 3. Further, the four parallel swing links 4 have balance weights 9 formed integral with upper ends thereof, respectively. Each parallel swing link 4 has an upper portion and a lower portion of the same size across the fulcrum shaft 5. This configuration is selected in order to allow the pendulum member 1 to swing right and left smoothly, with little energy, and over a maximum period of time.

The top frames 3C have arcuate recesses 3D formed in upper surfaces thereof contacting the fulcrum shafts 5 of parallel swing links 4. These recesses 3D allow for smooth rotation and positioning of the fulcrum shafts 5.

The pendulum member 1 defines a substantially sealed interior space 10. This interior space is vertically divided by a partition 11 disposed in an upper position corresponding to 1/3 of the vertical dimension of pendulum member 1. The space above the partition 11 defines a wind turbine chamber 13 with a wind turbine 12 disposed in horizontal posture therein. The wind turbine 12 has a rotary support shaft 14 extending in the fore and aft direction of pendulum member 1. The wind turbine chamber 13 includes passage separating plates 15 disposed in a vertically intermediate position thereof, and in opposite, right and left positions across the wind turbine 12, and tapered to define pointed ends, respectively. The pointed ends of the passage separating plates 15 are positioned slightly closer to the wind turbine 12 than are free ends of the partition 11. With the passage separating plates 15, the wind turbine chamber 13 defines two compressed air passages, i.e. an upper compressed air passage 13A and a lower compressed air passage 13B. The compressed air passages 13A and 13B have switch valves 16 at outlets 13C and 13D thereof, respectively.

The switch valve 16 of the upper compressed air passage 13A is pivotably suspended from the upper wall of pendulum member 1. The switch valve 16 of the lower compressed air passage 13B is pivotably suspended from one of the passage separating plates 15. Each switch valve 16 is pivotable only in a flowing direction of compressed air to check backflow of the compressed air. Specifically, as exemplified by the right switch valve 16 in Fig. 1, its lower end may abut on the passage separating plate 15, or as exemplified by the left switch valve 16, its pivotal movement may be restricted by a stopper 13E provided on the passage separating plate 15.

The space below the partition 11 defines a piston chamber 17 of square cross section to act as a compressed air generating chamber. The piston chamber 17 houses a spherical piston 18, which is one example of air compressor, disposed in a transversely intermediate position of the piston chamber 17, and having a diameter substantially corresponding to an inside measurement of the piston chamber 17. The piston 18 is maintained in a fixed position against movement of the pendulum member 1. Thus, when the pendulum member 1 swings right and left, the piston 18 fixed to its position slides right and left in the piston chamber 17. As a result, the piston 18 compresses air in one of the right and left portions across the piston 18 of the piston chamber 17 downstream in a swinging direction of the pendulum member 1. This compressing action takes place alternately in the right and left chamber portions with the right and left reciprocating swings of the pendulum member 1.

The piston 18 is in the form of a hollow or solid ball made of rubber, plastic or metal. However, in order for the pendulum member 1 to swing right and left reciprocally and efficiently, it is preferable that the piston 18 is in the form of a hollow ball made of rubber or plastic.

The piston chamber 17 and the upper, wind turbine chamber 13 communicate with each other through compressed air passages 19 formed between the right and left ends of the partition 11 and inner surfaces of right and left peripheral walls 1A of the pendulum member 1. Thus, the air compressed in the piston chamber 17 flows through the compressed air passages 19 into the wind turbine chamber 13. The compressed air flowing into the wind turbine chamber 13 enters either one of the upper compressed air passage 13A and lower compressed air passage 13B. A series of compressed air flows continuously and forcibly rotates the wind turbine 12 in one direction (e.g. clockwise in the drawings).

A generator 20 is mounted on an upper wall of the pendulum member 1. The generator 20 is operatively connected to the rotary support shaft 14 of the wind turbine 12 through a rotary transmission element 21 such as an endless belt. Thus, the generator 20 is rotatable by rotation of the wind turbine 12, thereby to generate electricity. It is preferable that, as shown in Fig. 3, the wind turbine 12 has a belt winding element 12A of larger diameter than a belt winding element 20A of the generator 20. The reason is that the number of rotations of the wind turbine 12 may be greatly increased.

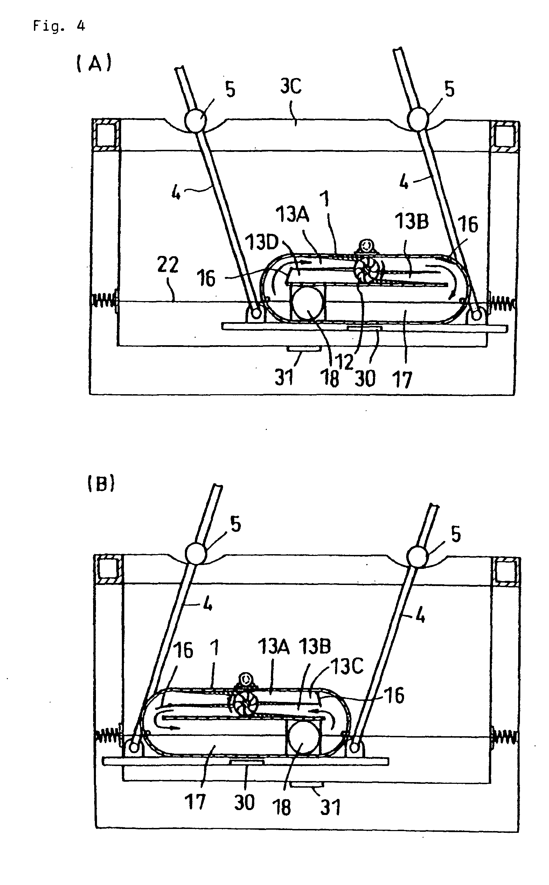

A support cord 22 in the form of a string such as a wire or rope is rigidly connected to the piston 18 to extend right and left through the core of the piston 18. As shown in Fig. 2, the support cord 22 extends outwardly of the pendulum member 1 through perforations 1B formed in the right and left peripheral walls 1A of the pendulum member 1. As shown in an enlarged portion of Fig. 2, the support cord 22 has opposite ends thereof connected to support frames 23 each extending between the pair of right and left props 3B of the machine casing 3. Specifically, each of the opposite ends of the support cord 22 extends through a receiving bore 24 formed in the support frame 23 to a position behind the support frame 23, with a stopper 25 rigidly connected to each opposite end. A compression spring 26 formed of a helical spring is mounted on the portion of the support cord 22 between the support frame 23 and stopper 25. The compression springs 26 apply a tension to the support cord 22 for constantly maintaining the support cord 22 in horizontal posture in the absence of an external force (Figs. 4A and 4B).

The piston 18 has gas sealing plates 27 rigidly attached to opposite, right and left sides thereof through mounting elements 28 to obstruct air flows between portions of the piston chamber 17 formed at right and left sides of the piston 18 and secure gas tightness for each of the right and left portions of the piston chamber 17. A lubricant is applied to inner surfaces of the peripheral walls of piston chamber 17 to ensure smooth right and left sliding of the piston 18 and gas sealing plates 27 relative to the pendulum member 1.

The gas sealing plates 27, preferably, are formed of a flexible material such as rubber or soft plastic.

Numeral 29 in Fig. 1 denotes guide rollers arranged above the penetrations 1B inwardly of the right and left peripheral walls 1A of pendulum member 1. The guide rollers 29 prevent the support cord 22 from contacting peripheral walls of the penetrations 1B to impair the smooth right and left sliding of the piston 18 relative to the pendulum member 1.

A permanent magnet 30 acting as a field magnet is provided integral with a lower, transversely middle position of the pendulum member 1, that is the lower surface of the support frame 2. An electromagnet 31 is disposed in a transversely middle position on the upper surface of the base 3A of machine casing 3. The electromagnet 31 has switchable right and left polarities, so that, as described hereinafter, the polarity is reversible between north and south with right and left swinging of the pendulum member 1.

Though not shown in the drawings, the number of field magnet 30 and electromagnet 31 may be increased to form two, three or more pairs. An increased number of magnets, preferably, are arranged at predetermined intervals in the right and left direction. In the case of an enlarged apparatus, it is preferable that an increased number of magnets form two, three or more pairs in the fore and aft direction also.

Next, operation of the pendulum type power generating apparatus in the above embodiment will be described with reference to Figs. 2, 4A, 4B and 5 through 9.

When the pendulum member 1 is not swinging right and left, the various components are in their respective home positions shown in Fig. 2. That is, the pendulum member 1 is in a lowermost position in a right and left swinging track. The piston 18 is in a transversely middle position within the piston chamber 17. The support cord 22 has the compression springs 26 at the opposite ends thereof compressed to keep applying a force for maintaining this support cord 22 in horizontal posture. The parallel swing links 4 remain still in vertical posture.

When a force is applied to push the pendulum member 1 right or left from this stationary state (e.g. a force acting rightward in the illustrated example), the pendulum member 1 swings about the fulcrum shafts 5 of parallel swing links 4 from the lowermost position shown in Fig. 2 to an upper right limit position shown in Fig. 4A. At this time, the piston 18 in the piston chamber 17 is fixedly maintained in the transversely middle position by the support cord 22. Consequently, the piston 18 slides leftward relative to the pendulum member 1, and ultimately reaches the left end of the piston chamber 17 as shown in Fig. 4A. With the relative slide between the pendulum member 1 and piston 18, air in the portion of piston chamber 17 to the left of piston 18 is compressed. Conversely, air in the portion of piston chamber 17 to the right of piston 18 is decompressed.

The compressed air flows with force into the wind turbine chamber 13 above through the left compressed air passage 19. However, the outlet 13D of lower compressed air passage 13B is closed by the switch valve 16 to block entry of the air. The compressed air flows with force only into the upper compressed air flow passage 13A. As a result, the wind turbine 12 is rotated clockwise by the incoming compressed air. This rotation of wind turbine 12 rotates the generator 20 to generate electricity. The incoming compressed air pushes open the switch valve 16 which has been closing the outlet 13C of upper compressed air flow passage 13A, and flows into the decompressed region, i.e. the portion of piston chamber 17 to the right of the piston 18.

The pendulum member 1 having swung rightward and reached the upper limit position is then swung down leftward by gravity. The pendulum member 1 reaches the lowermost position shown in Fig. 2, and swings on about the fulcrum shafts 5 of parallel swing links 4 to an upper left limit position shown in Fig. 4B. At this time, the piston 18 in the piston chamber 17 is maintained in the transversely fixed position by the support cord 22. Consequently, the piston 18 and pendulum member 1 slide right and left relative to each other. The piston 18 ultimately reaches the right end of the piston chamber 17 as shown in Fig. 4B. With the relative slide between the pendulum member 1 and piston 18, air in the portion of piston chamber 17 to the right of piston 18 is compressed. Conversely, air in the portion of piston chamber 17 to the left of piston 18 is decompressed.

The compressed air flows with force into the wind turbine chamber 13 above through the right compressed air passage 19. However, the outlet 13C of upper compressed air passage 13A is closed by the switch valve 16 to block entry of the air. The compressed air flows with force only into the lower compressed air flow passage 13B. As a result, the wind turbine 12 is rotated clockwise by the incoming compressed air. This rotation of wind turbine 12 rotates the generator 20 to generate electricity. The incoming compressed air pushes open the switch valve 16 which has been closing the outlet 13D of lower compressed air flow passage 13B, and flows into the decompressed region, i.e. the portion of piston chamber 17 to the left of the piston 18.

In this way, the right and left reciprocating swings of the pendulum member 1 continuously rotate the wind turbine 12 in one direction to generate electricity with maximal efficiency.

In the above operation, the piston 18 inevitably moves to an increased height above the ground as the pendulum member 1 swings right and left upward from the lowermost position to the right and left upper limit positions. As a result, the support cord 22 assumes a horizontal, straight posture (Fig. 4) from a state with an intermediate portion thereof pulled downward (Fig. 2). The support cord 22 would become loose, but this loosening is effectively absorbed by the compression springs 26 pressing the stoppers 25 right and left. Consequently, the stoppers 25 can constantly maintain a fixed position relative to the pendulum member 1.

The right and left reciprocating swings of the pendulum member 1 are greatly influenced by the permanent magnet 30 disposed on the lower surface of support frame 2 and the electromagnet 31 disposed on the upper surface 3A of machine casing 3.

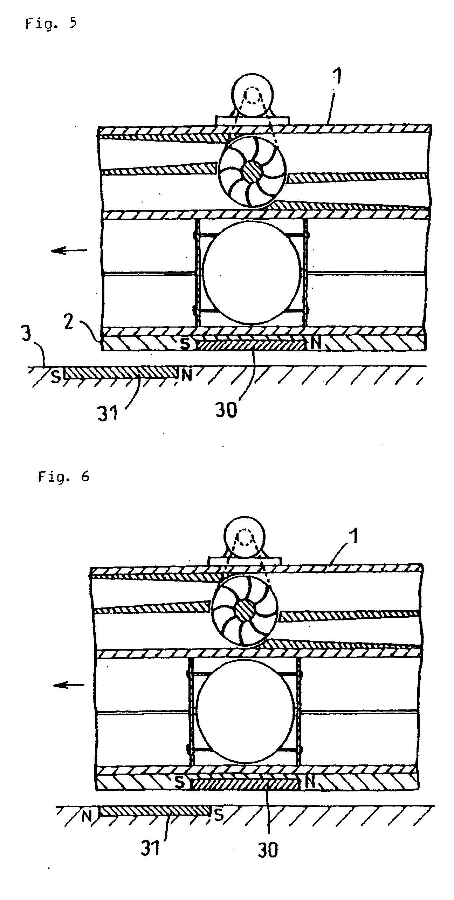

The working of these magnets will be described next with reference to Figs. 5 through 9. For expediency of description, it is assumed here that the permanent magnet 30 on the pendulum member has the north pole at the right end and the south pole at the left end.

Figs. 5 through 9 show working stages in which the pendulum member 1 is swung from the upper right limit position shown in Fig. 4A to the lowermost position, and to the upper left limit position shown in Fig. 4B.

First, as shown in Fig. 5, before the pendulum member 1 arrives at the lowermost position, with the two magnets 30 and 31 not opposed to each other yet, the electromagnet 31 has the north pole set to the right end and the south pole to the left end. At this stage, the south pole at the left end of the permanent magnet 30 of pendulum member 1 continues being attracted to the north pole at the right end of the electromagnet 31. This promotes the leftward swing of the pendulum member 1 to a maximum.

Next, as the pendulum member 1 continues to swing leftward to reach a stage where, as shown in Fig. 6, the left end of permanent magnet 30 is opposed to the right end of electromagnet 31, the polarity of electromagnet 31 is reversed right and left. That is, the right end of electromagnet 31 becomes the south pole, and the left end the north pole. By switching the polarity of electromagnet 31, a mutual repulsion takes place between the south pole at the left end of permanent magnet 30 and the south pole at the right end of electromagnet 31, to present no obstruction to the swing of pendulum member 1. Further, the south pole at the right end of electromagnet 31 begins to attract the north pole at the right end of permanent magnet 30. This acts to swing the pendulum member 1 further leftward.

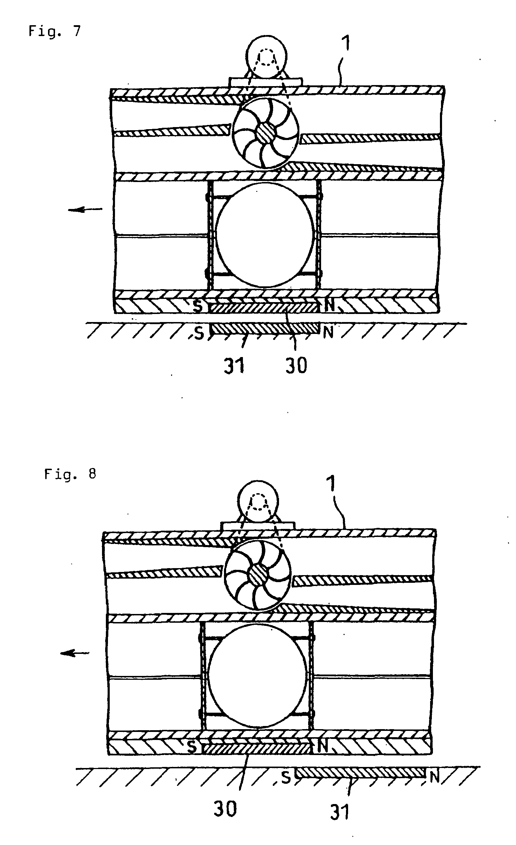

Next, as shown in Fig. 7, the pendulum member 1 swings further leftward to the lowermost position where the two magnets 30 and 31 are fully and vertically opposed to each other. At this stage, the polarity of electromagnet 31 is reversed right and left again. That is, the right and left polarities of electromagnet 31 now coincide with the right and left polarities of permanent magnet 30. With this polarity switching of electromagnet 31, the south pole at the left end of electromagnet 31 and the south pole at the left end of permanent magnet 30 repel each other, and so do the north pole at the right end of electromagnet 31 and the north pole at the right end of permanent magnet 30. Thus, no attraction occurs between the two magnets 30 and 31. As a result, the pendulum member 1 becomes completely free from a force that brakes the swing thereof. The pendulum member 1 continues being swung leftward lightly and smoothly by gravity and an inertial force acting leftward.

The polarity of electromagnet 31 remains unchanged until a stage shown in Fig. 8 in which the pendulum member 1 has moved leftward from the lowermost position to have the right end of permanent magnet 30 opposed to the left end of electromagnet 31. The north pole at the right end of permanent magnet 30 continues being attracted to the south pole at the left end of electromagnet 31. This promotes the leftward swing of pendulum member 1 to a maximum.

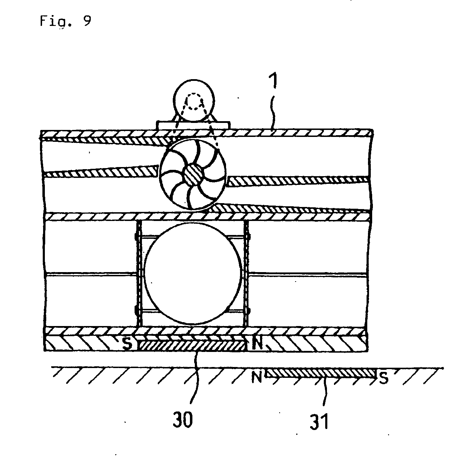

Next, as shown in Fig. 9, the pendulum member 1 swings further leftward whereby the two magnets 30 and 31 become no longer opposed to each other. Immediately before this stage, the polarity of electromagnet 31 is switched again. Thus, the electromagnet 31 now has the left end providing the north pole and the right end providing the south pole. With this polarity switching, a mutual repulsion occurs between the north pole at the right end of permanent magnet 30 and the north pole at the left end of electromagnet 31. This results in a force that pushes the pendulum member 1 further leftward. The pendulum member 1 continues being swung leftward lightly and smoothly by gravity and an inertial force acting leftward. The pendulum member 1 finally arrives at the upper left limit position shown in Fig. 4B.

The pendulum member 1 arriving at the upper left limit position will swing in the opposite direction (rightward) next. The polarity of electromagnet 31 is switched in the order reversed from the above. Under this control, as described above, the pendulum member 1 continues being swung rightward lightly and smoothly by gravity and inertial force. As a result, electric power is obtained continuously.

The balance weights 9 disposed at the upper ends of parallel swing links 4 are effective to produce the inertial force for the right and left reciprocating swings of the pendulum member 1. The right and left reciprocating swings of the pendulum member are thereby made smoother, and continued over an extended time with little energy. This contributes to a great improvement in the power generating efficiency of the generator.

### <Second Embodiment>

Next, the construction shown in Figs. 10 and 11 includes a different device for fixing the piston 18 relative to the pendulum member 1. In the following detailed description, parts identical to those of the foregoing embodiment are shown with the same reference numerals, and are not described again.

The piston 18 is vertically movably supported by support poles 32 erected on the base 3A of machine casing 3. Specifically, the piston 18 has support arms 33 formed integral therewith and extending fore and aft from a core portion thereof. The arms 33 project from transversely elongate, linear slits 34 formed in front and rear walls 1C of the pendulum member 1. Each projecting end is supported, through a support boss 36, by an arm 35 fitted in the support pole 32 to be only vertically movable. This construction allows a right and left reciprocation relative to the piston 18.

On the other hand, inwardly of the transversely elongate slits 34 formed in the pendulum member 1 are sealing elements 37 having larger vertical and horizontal dimensions than the slits 34. These sealing elements 37 prevent leakage of the compressed air from the piston chamber 17 as much as possible. The sealing elements 37 are formed of rubber or plastic, and preferably a flexible material in particular. The sealing elements 37 are divided in vertically intermediate positions into upper and lower parts to ensure relative sliding of the support arms 33 and pendulum member 1.

### <Third Embodiment>

Next, the construction shown in Figs. 12 and 13 includes another different device for fixing the piston 18 relative to the pendulum member 1.

This modification is based on the same concept as the embodiment shown in Figs. 1 through 9 that employs the support code 22. However, the construction shown in Figs. 1 through 9 employs a flexible material such as a rope or wire for the support cord 22, whereas this embodiment provides a construction suited for employing a rod, e.g. a metal rod or plastic rod.

In the following detailed description, parts identical to those of the foregoing embodiments are shown with the same reference numerals, and are not described again.

As in the construction shown in Figs. 1 through 9, a support element 22 in the form of a metal rod is rigidly connected to the piston 18 to extend right and left through the core of the piston 18. As shown, the support element 22 extends outwardly of the pendulum member 1 through perforations 1B formed in the right and left peripheral walls 1A of the pendulum member 1. As shown in enlargement in Fig. 13, the support element 22 in the form of a metal rod has each opposite end vertically guided along a guide rail 38 attached to a support frame 23 bridging the front and rear props 3B of machine casing 3.

Specifically, each opposite end of the support element 22 in the form of a metal rod has a support leg 39 formed integral therewith and extending in the fore and aft direction. A guide wheel 40 in the form of a bearing and oriented in the fore and aft direction is mounted adjacent each opposite end of the support element 22, and a guide wheel 41 in the form of a bearing and oriented in the transverse direction is mounted on each of front and rear ends of the support leg 39. As seen, these guide wheels 40 and 41 are guided by a pair of front and rear guide rail portions 38A of guide rail 38 that restrict fore and aft swinging, and by guide rail portions 38B formed integral with and lying laterally outwardly of the front and rear guide rail portions 38A for restricting right and left swinging. Though these guide rail portions are formed integrally as illustrated, they may be formed separately as necessary.

This embodiment includes upper and lower guide rollers 29 for guiding the support element 22 formed of a metal rod by contacting the upper and lower surfaces thereof. Both upward and downward forces are applied to the support element 22 moving up and down with the right and left reciprocating swings of the pendulum member 1. Thus, with both upward and downward movements of the pendulum member 1, the support element 22 remains out of contact with the peripheral walls of penetrations 1B. This is effective for realizing a smooth right and left relative sliding of the pendulum member 1 and piston 18.

According to the above construction, the right and left reciprocating swings of the pendulum member 1 result in the support element 22 formed of a metal rod moving only up and down by action of the guide rails 38 and guide wheels 40 and 41. Thus, compared with the support code 22 in the form of a rope or wire, this construction is capable of maintaining the piston 18 fixed relative to the pendulum member 1 while applying no load to the right and left reciprocating swings of the pendulum member 1. This effectively secures inertial forces of right and left reciprocating swings of the pendulum member 1 for continuing the right and left reciprocating swings of the pendulum member 1 with increased lightness and smoothness.

### <Fourth Embodiment>

Next, the construction shown in Fig. 14 includes a device for increasing the quantity of power generation.

In the following detailed description, parts identical to those of the foregoing embodiments are shown with the same reference numerals, and are not described again.

A plurality of (three in the illustrated example) wind turbines 12 are arranged in the wind turbine chamber 13 along the direction of compressed air flows. Generators 20 corresponding in number to the plurality of wind turbines 12 are installed on the top frames 3C of machine casing 3. The generators 20 are operatively connected to the wind turbines 12 through rotation transmission elements 21, respectively.

This construction is capable of obtaining power generation from the plurality of generators 20 all at once, and is suited for a site that requires a large quantity of power generation.

In this modification, the relatively heavy generators 20 are arranged not on the pendulum member 1 but on the machine casing 3 which is more desirable in view of strength. Consequently, the pendulum member 1 is greatly reduced in total weight, to be capable of swinging right and left with increased lightness, to achieve a desired large quantity of power generation.

The construction employed in this modification, in which the generators 20 are arranged on the machine casing 3, may of course be employed also in the embodiments shown in Figs. 1 through 13. That is, this construction may be employed also for the combination of one wind turbine and one generator.

Part of the electric energy obtained with this pendulum type power generating apparatus is sufficient for use in switching the polarity of electromagnet 31 described above. However, it is preferable to use commercial electricity depending on the quantity of power generation.

In each of the above embodiments, though not shown, the electricity obtained from the generator(s) 20 is transmitted through a stabilizer to a transformer for voltage transformation. Further, the electricity is transmitted to a capacitor to be stored therein for use for an appropriate purpose in a desired location.

Further, the rotary support shaft 14 of wind turbine 12 is supported by the front and rear walls 1C of pendulum member 1 through bearings. This support shaft structure, preferably, employs known magnetic bearings in place of the ordinary bearings. In particular, active magnetic bearings are desirable.

When the pendulum member 1 makes a return swing after swinging right or left, a lull, though brief, occurs at which no compressed air flows. The magnetic bearings are extremely effective as a device for rotating the wind turbine 12 during the lull continuously, smoothly and efficiently without lowering the rotatory power of the wind turbine 12.

The pendulum type power generating apparatus according to this invention described in each of the above embodiments uses parts and materials used commonly at least at present, to minimize the consumption of natural resources such as fossil fuels, achieve low cost, and to be totally free from limitations imposed by weather and geographic conditions. The power generating apparatus may be small for household use, medium-size for industrial use, or very large-scale for use in a power plant or the like. A large quantity of electricity may be generated with such apparatus arranged side by side. Thus, as one example of future applications, with a diffusion of electric cars, the apparatus may be installed at a gasoline station or the like to supply electricity to electric cars in the same way as gasoline is supplied. Further, the apparatus, which does not need natural resources, of course is desirable from the viewpoint of global environment. In addition, the apparatus, as distinct from wind power generators and solar power generators, may be installed in any region on the earth.

In particular, the electric power generated may be used to electrolyze sea water or fresh water to produce hydrogen and oxygen. The hydrogen obtained may be used as a next generation fuel (e.g. for fuel cells). Thus, the apparatus according to this invention may be used effectively in varied fields such as automobiles, households and industries. Its industrial utility is far greater than that of varied existing power generating apparatus.

## Claims

1. A pendulum type power generating apparatus comprising:
a pendulum member defining a substantially sealed space therein; and
parallel swing links for suspending said pendulum member to be reciprocally swingable right and left;
said substantially sealed space including a wind turbine chamber having a wind turbine mounted therein, and a piston chamber for transmitting compressed air into said wind turbine chamber;
said piston chamber having an air compressor slidably mounted in gastight condition for sliding relative to said pendulum member to compress air in said piston chamber;
said pendulum member and said air compressor being swingable right and left relative to each other to compress and decompress air in said piston chamber;
compressed air flowing from an air-compressing portion of said piston chamber to an air-decompressing portion of said piston chamber for continuously rotating said wind turbine, rotation of said wind turbine being transmitted to a generator;
the apparatus further comprising a field magnet disposed in one of a lower position of said pendulum member and a ground position, and an electromagnet disposed in the other, said electromagnet having switchable polarity to attract and repel said field magnet, thereby to promote right and left reciprocating swings of said pendulum member.

2. A pendulum type power generating apparatus as defined in claim 1, wherein said parallel swing links for suspending said pendulum member are pivotally supported in intermediate positions thereof by a machine casing, each of said parallel swing links having a balance weight attached to an upper end thereof.
